# DEMANDE DE BREVET EUROPEEN

(11) **EP 1 850 615 A1**
(43) Date de publication de la demande: **31.10.2007**
(21) Numéro de dépôt: 06113238.7
(22) Date de dépôt: 27.04.2006
(51) Int. Cl.: H04Q 7/38

(54) **Méthode de transmission des droits d'accès pour équipements mobiles**

(71) Demandeur: Nagravision S.A., 1033 Cheseaux-sur-Lausanne (CH)
(72) Inventeur: Moreillon, Guy, 1042, Bioley-Orjulaz (CH)
(74) Mandataire: Wenger, Joel-Théophile

(57) **Abrégé**

La présente invention propose une méthode de transmission de messages d'administration liés à un flux de données numériques encryptées diffusé via une pluralité d'émetteurs d'un réseau de diffusion à au moins un équipement mobile, ce dernier étant également connecté via un réseau de communication mobile à un centre de gestion, ladite méthode est caractérisée en ce qu'elle comprend les étapes suivantes:
- détermination par le centre de gestion, de données de localisation de l'équipement mobile via le réseau de communication mobile,
- désignation, à partir des dites données de localisation, d'un moins un émetteur de diffusion couvrant la zone de localisation dudit équipement mobile,
- création d'au moins un message d'administration propre audit équipement mobile,
- acheminement du message d'administration à l'émetteur désigné pour transmission avec le flux de données numériques encryptées.

## Description

### Domaine technique

L'invention concerne le domaine de l'accès conditionnel à un flux de données numériques diffusé par voie hertzienne et reçu par une pluralité d'équipements mobiles, tels que, par exemple, un téléphone portable, un assistant personnel PDA (Personal Digital Assistant), un récepteur portable de télévision numérique, un ordinateur portable. Les données numériques diffusées correspondent à des contenus tels des événements de télévision à péage, des contenus audio, des jeux, des logiciels ou des informations d'actualité.

Ces données sont cryptées et ne peuvent être reçues en clair que par des équipements autorisés dont l'utilisateur a acquis les droits nécessaires. Ces droits, stockés dans un module de sécurité associé à l'équipement mobile, consistent en un ensemble de clés permettant de décrypter des mots de contrôles contenus dans des messages de contrôle ECM (Entitlement Control Message) diffusés dans le flux des données audio / vidéo.

Un module de sécurité est un dispositif réputé inviolable contenant diverses clés d'encryption/décryption, des informations servant à identifier un utilisateur sur un réseau et des données qui définissent des droits acquis par l'utilisateur pour la réception d'un contenu diffusé. Le module de sécurité peut se trouver sous différentes formes telles qu'une carte à puce amovible insérée dans un lecteur, un circuit intégré soudé sur une carte mère, une carte du type SIM (Subscriber Identity Module) que l'on rencontre dans la plupart des équipements mobiles.

Plus particulièrement, l'invention concerne une méthode de transmission de messages d'administration à destination d'une pluralité d'équipements mobiles, ainsi qu'une méthode de gestion des messages au niveau des équipements mobiles,.

### Arrière plan technique

Actuellement les équipements mobiles configurés pour la réception de programmes de télévision numérique par exemple sont basés sur des technologies normalisées comme le DVB-H (Digital Video Broadcast, Handheld).

La technologie DVB a été conçue pour normaliser les décodeurs de télévision numériques (set top boxes) dans le but de réduire leurs coûts à grande échelle. Elle normalise les éléments intervenant au niveau de l'accès conditionnel au contenu diffusé dans le format MPEG-2 ou MPEG-4 pour la télévision mobile sur Internet. Ces éléments consistent en l'algorithme d'encryption du contenu diffusé, les messages de contrôle ECM contenant les clés de décryption ou mots de contrôle, les messages d'administration EMM contenant les droits des utilisateurs et l'interface entre le décodeur et le module de sécurité gérant l'accès conditionnel.

La normalisation ne s'étend ni au contenu à valeur ajoutée des messages ECM et EMM, ni à la méthode de protection de ceux-ci. Chaque fournisseur d'accès conditionnel utilise sa propre structure de données et ses propres moyens de protection pour un même contenu diffusé. La technologie DVB offre donc de nombreuses possibilités de développement de la sécurité du contenu.

La gestion des droits d'accès aux contenus encryptés diffusés nécessite la transmission d'un grand nombre de messages d'administration EMM proportionnel au nombre d'équipements mobiles connecté au réseau. Ces messages s'adressent à chaque équipement mobile individuellement et sont répétés fréquemment sur une longue période afin d'assurer leur bonne réception par chaque équipement.

La transmission d'un tel volume de messages nécessite une largeur de bande relativement importante au détriment des données de contenus. A cause des limitations de largeur de bande disponibles imposées par les normes des réseaux mobiles, les opérateurs sont contraints à réduire au minimum le nombre, la fréquence de répétition et les périodes de transmission des messages d'administration. Au vu de la variété des types de contenus proposés par les opérateurs et des abonnements souscrits par les utilisateurs, les droits d'accès doivent être renouvelés régulièrement ce qui entraîne la diffusion d'une quantité importante de messages.

### Description de l'invention

Le but de la présente invention est de proposer une méthode permettant la transmission du plus grand nombre possible de messages d'administration malgré les contraintes de largeur de bande inhérentes au réseau mobile. Plus précisément, il s'agit de gérer la transmission de ces messages en fonction de la configuration des réseaux mobiles et de la distribution géographique des émetteurs et des équipements mobiles récepteurs.

Ces buts sont atteints par une méthode de transmission de messages d'administration liés à un flux de données numériques encryptées diffusé via une pluralité d'émetteurs d'un réseau de diffusion à au moins un équipement mobile, ce dernier étant également connecté via un réseau de communication mobile à un centre de gestion, ladite méthode est caractérisée en ce qu'elle comprend les étapes suivantes:
- détermination par le centre de gestion, de données de localisation de l'équipement mobile via le réseau de communication mobile,
- désignation, à partir des dites données de localisation, d'un moins un émetteur de diffusion couvrant la zone de localisation dudit équipement mobile,
- création d'au moins un message d'administration propre audit équipement mobile,
- acheminement du message d'administration à l'émetteur désigné pour transmission avec le flux de données numériques encryptées.
   La méthode se distingue par l'utilisation de données de localisation de l'équipement mobile, par exemple sous forme d'un identificateur de cellule d'un réseau GSM (Global System for Mobile communication), pour aiguiller des messages d'administration EMM (Entitlement Management Message). Selon une réalisation, ces messages sont transmis à l'émetteur de diffusion le plus proche de la cellule en question pour les diffuser conjointement aux données des contenus. Ainsi un émetteur donné ne diffusera que des messages à destination d'équipement mobiles se trouvant à sa portée et non pas ceux destinés à d'autres équipements plus éloignés mais à la portée d'un émetteur voisin.
   Il arrive souvent qu'un équipement mobile puisse recevoir des données de plusieurs émetteurs de diffusion selon sa position géographique. Ainsi, selon l'invention, il est prévu de faire transmettre les messages d'administration par tous les émetteurs susceptible de couvrir la zone où se trouve l'équipement mobile.
   Selon une autre variante, l'équipement mobile communique régulièrement avec le centre de gestion d'une part pour confirmer sa présence sur le réseau et d'autre part pour fournir audit centre des données relative à la qualité de réception du signal provenant de l'antenne de la cellule. Ces informations permettent de suivre un équipement mobile en déplacement d'une cellule vers une autre afin d'acheminer les messages d'administration vers la cellule dans laquelle se trouve effectivement l'équipement mobile.
   L'équipement mobile peut également fournir des données concernant la qualité de réception du signal provenant de l'émetteur de diffusion. Le centre de gestion peut dans ce cas diriger les messages d'administration vers l'émetteur se trouvant à proximité de la cellule de l'équipement mobile et ainsi assurer une réception optimale du flux et des messages diffusés.
   L'accès aux données du flux est ainsi autorisé seulement aux équipements mobiles se trouvant en un lieu géographique donné à portée d'un émetteur apte à transmettre des messages d'administration EMM dans les meilleures conditions.

### Brève description des figures

L'invention sera mieux comprise grâce à la description détaillée qui va suivre et qui se réfère aux figures annexées données à titre d'exemples nullement limitatifs.
- La figure 1 illustre un schéma bloc d'un exemple de configuration avec deux cellules de réseau mobile distinctes comprenant des équipements mobiles recevant des messages EMM individuels spécifiques autorisant l'accès au flux des émetteurs de diffusion.
- La figure 2 illustre un exemple schématisé de zones de diffusion des émetteurs du réseau de diffusion et des cellules du réseau mobile à l'intérieur de ces zones de diffusion.

### Description détaillée de l'invention

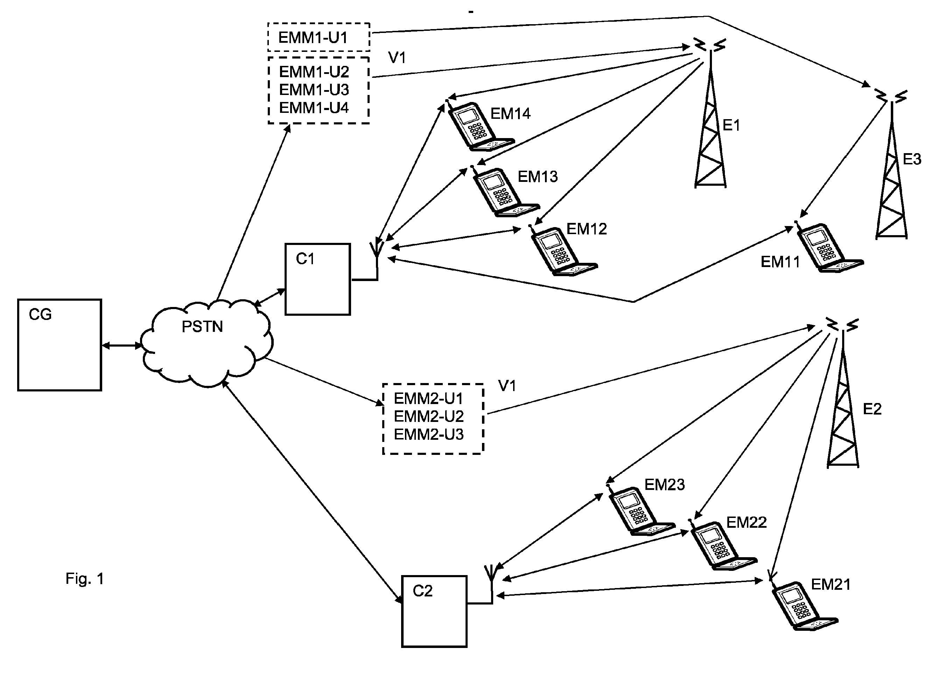

Le schéma de la figure 1 montre deux stations de base associées chacune à une cellule (C1, C2) de réseau mobile connectées via un réseau public (PSTN) à un centre de gestion (CG). Des équipements mobiles (EM11, ..., EM23) communiquent d'une part avec les stations de bases des cellules (C1, C2) via le réseau mobile et d'autre part ils reçoivent des messages d'administration diffusés à partir d'émetteurs de diffusion (E1, E2, E3). Un message d'administration peut contenir des données d'accès à un contenu diffusé, des données de mise à jour (patch, clés) ou des listes de positive (ou négative) des équipements mobiles autorisés (ou interdit) à la réception des données, ainsi que toute autre information permettant la gestion d'un ensemble d'équipements mobiles.

Lorsqu'un équipement mobile (EM11, ..., EM23) se connecte au réseau, la station de base associée à la cellule (C1, C2) transmet au centre de gestion (CG), via un réseau public (PSTN) par exemple, des données de localisation de l'équipement mobile (EM11, ..., EM23). Ces données comprennent notamment un identificateur de la cellule (C1, C2) permettant au centre de gestion (CG) de déterminer une zone géographique dans laquelle se trouve l'équipement mobile (EM11, ..., EM23).

Selon une variante de réalisation de l'invention, l'équipement mobile est muni d'un système global de positionnement du type GPS (Global Positioning System) qui détermine les coordonnées correspondant à sa position géographique. Cette option permet d'atteindre une précision de localisation nettement meilleure qu'avec un identifiant de cellule seul qui couvre une zone relativement étendue.

La localisation de l'équipement mobile peut se faire via d'autres voies de communication telles que WiMax, Wifi, ou tout autre méthode utilisant une voie bidirectionnelle.

Selon une première variante indiquée par V1, le centre de gestion compare les données de position reçues avec des données de position des émetteurs de diffusion stockées dans une base de données. Le résultat de la comparaison permet de déterminer quel émetteur (ou quels émetteurs) de diffusion se trouve dans le plus proche voisinage de l'équipement mobile. Dans l'exemple de la figure 1, les positions des équipements mobiles EM11, EM12, EM13 et EM14 connectés à la cellule C1 et les équipements EM21, EM22 et EM23 de la cellule C2 enregistrées par le centre de gestion (CG) permettent "d'attribuer" un émetteur de diffusion (E1, E2, E3) à un ou plusieurs équipements. Ainsi les équipements EM12, EM13 et EM14 seront associés à l'émetteur E1, l'équipement EM11 à l'émetteur E3 et les équipements EM21, EM22 et EM23 à l'émetteur E2. Le critère principal de ces associations repose sur la proximité géographique des émetteurs par rapport à la position des équipements ou plutôt par rapport à la cellule. Les messages d'administration seront donc acheminés par le centre de gestion (CG) à l'émetteur dont dépendent les équipements pour lesquels les droits d'accès doivent être mis à jour. Dans l'exemple, les messages EMM1-U2, EMM1-U3 et EMM1-U4 sont transmis à l'émetteur E1 qui les diffusent aux équipements mobiles concernés EM12, EM13 et EM14 de la cellule C1. De même, les messages EMM2-U1, EMM2-U2, EMM2-U3 sont acheminés vers l'émetteur E2 proche de la cellule C2 qui les transfère aux équipements EM21, EM22 et EM23.

Selon une variante, les équipements mobiles sont munis de moyens de mesure du niveau du signal émis par les émetteurs de diffusion. Ce niveau mesuré est combiné aux données de position que l'équipement mobile transmet au centre de gestion (CG). Cette donnée supplémentaire permet d'affiner la détermination de l'émetteur de diffusion selon un critère de qualité de réception en sus de celui de la position. En effet en milieu urbain où le signal diffusé est fortement perturbé par de multiples obstacles, l'émetteur le plus proche de la cellule n'est pas forcément celui qui sera le mieux capté par un équipement mobile. Dans le schéma de la figure 1, ce cas est illustré par l'équipement mobile EM11 qui capte le signal de l'émetteur E3 avec un niveau supérieur à celui du signal émis par l'émetteur E1. Le centre de gestion (CG) transmettra donc le message EMM1-U1 non pas à l'émetteur E1 selon le critère de position seul mais à l'émetteur E3 selon les critères de position et de qualité du signal. Dans le doute, le centre de gestion peut également transmettre le message EMM1-U1 au deux émetteurs.

Selon une autre variante, chaque émetteur de diffusion (E1, E2, E3) comprend un identifiant qui est inclus dans le flux de données transmises. Cette indication est reçue par l'équipement mobile (EM11, ..., EM23) et transmise au centre de gestion (CG) via la station à laquelle il est connecté. L'identifiant de l'émetteur de diffusion (E1, E2, E3) est utilisé pour déterminer à quel émetteur les messages d'administration du centre de gestion (CG) seront acheminés et inclus dans le flux de données diffusées par cet émetteur. Dans le cas où le niveau du signal est également mesuré, l'équipement mobile (EM11, ..., EM23) transmet l'identifiant de l'émetteur avec la valeur du niveau du signal mesuré. Ces données permettent au centre de gestion (CG) de mieux cibler la transmission des messages d'administration surtout en milieu perturbé où l'intensité du signal reçu n'est pas nécessairement proportionnelle à la distance séparant l'émetteur et l'équipement mobile.

Selon une réalisation préférée, l'équipement mobile transmet périodiquement ses données de position et de niveau de signal au centre de gestion et non pas uniquement lors de sa connexion au réseau mobile. Cette fonctionnalité permet au centre de gestion de suivre un équipement mobile en déplacement dans une zone couverte par plusieurs cellules et de fournir une mise à jour régulière et efficace des droits d'accès quelle que soit sa position. De plus, les messages d'administration sont transmis de préférence à destination des équipements mobiles effectivement en service qui confirment leur connexion au réseau en transmettant leur données au centre de gestion. Dans le cas où un équipement mobile n'est pas localisé, les messages d'administration sont transmis à tous les émetteurs.

Les données de position comme les identifiants de cellule de réseau ou les coordonnées de position des équipements mobiles peuvent être exploitées de manière à empêcher l'accès à certains contenus diffusés à des équipements mobiles se trouvant dans une région donnée. En effet les messages d'administration diffusés peuvent contenir des droits d'accès dépendant du lieu de réception de contenus. Ainsi, un opérateur peut déterminer une zone couvrant une ou plusieurs cellules à partir de laquelle un contenu prédéterminé ne pourra pas être décrypté faute de droits adéquats.

De plus, les données de position peuvent aussi être complétées par une requête de droits d'accès accompagnée de données identifiant l'équipement mobile. Le centre de gestion vérifie ces données propres à l'équipement mobile respectivement à l'abonné en les confrontant à des données équivalentes préalablement enregistrées. Par exemple, le numéro de téléphone, l'identifiant de la carte SIM (Subscriber Identity Module) ou du module de sécurité sont transmis au centre lors de la connexion de l'équipement mobile au réseau. Lorsque la vérification réussit, le centre génère et transmet les messages d'administration soit aux émetteurs de diffusion, soit aux stations de base des cellules selon la position des équipements mobiles. Dans le cas contraire, aucun message ne se sera créé et l'accès aux contenus du flux diffusé sera refusé.

Les équipements mobiles (EM11, ..., EM23) sont susceptibles de se déplacer d'une cellule du réseau mobile vers une autre tout en conservant la possibilité de recevoir les données diffusées par l'un ou l'autre des émetteurs de diffusion (E1, E2, E3).

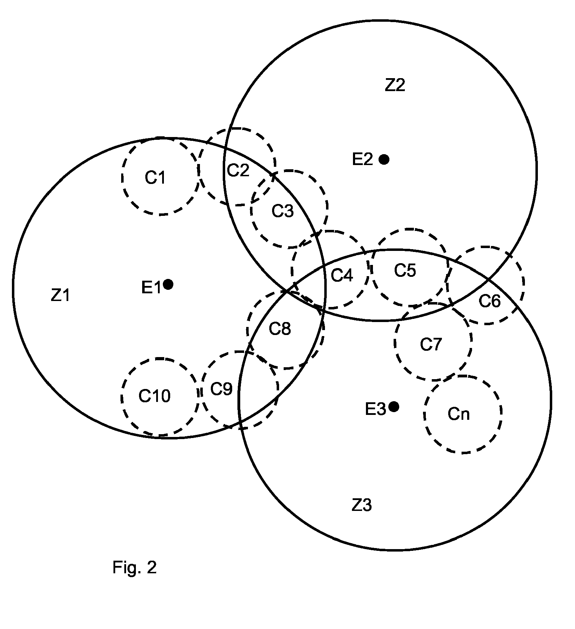

La figure 2 illustre une telle situation où des cellules (C1 - C10 - Cn) du réseau mobile forment des mailles s'étendant sur une ou plusieurs zones de diffusion (Z1, Z2, Z3) des émetteurs (E1, E2, E3). Lorsqu'un équipement mobile se déplace par exemple de la première zone (Z1) de diffusion vers la troisième zone (Z3) de diffusion, il transmet ses données de localisation aux cellules qu'il traverse, soit par exemple aux cellules C1 à C7. En admettant que chaque émetteur diffuse un même flux, ces données permettent à l'équipement mobile d'accéder aux contenus diffusés dans les zones (Z1) et (Z3) couvertes par les émetteurs (E1) et (E3) sans interruption. Selon, une variante, l'équipement mobile transmet des données de localisation chaque fois qu'il pénètre dans une cellule lors de son déplacement. Lorsque la cellule se trouve à cheval sur deux ou plusieurs zones de diffusion comme par exemple les cellules C2 à C6, l'équipement mobile peut recevoir des messages d'administration de plusieurs émetteurs lorsque leurs positions par rapport aux cellules sont similaires. Dans ce cas, il est préférable d'ajouter aux identifiants de cellules le niveau du signal reçu des émetteurs pour que le centre de gestion puisse distinguer l'émetteur le plus favorable auquel il acheminera les messages d'administration. Une autre solution consiste à fournir au centre de gestion les coordonnées de l'équipement mobile déterminée par un dispositif GPS incorporé qu'il compare avec celles des émetteurs afin de localiser l'émetteur le plus proche.

Le centre de gestion reçoit les informations non seulement de localisation de l'équipement mobile mais également l'information de son absence (ou son arrivée) du réseau mobile. Ainsi, le centre de gestion peut traiter les messages en attente dès qu'un équipement mobile est signalé dans le réseau et les transmettre à l'émetteur (ou aux émetteurs) le plus proche de l'équipement mobile.

## Revendications

1. Méthode de transmission de messages d'administration liés à un flux de données numériques de contenus encryptées diffusé via une pluralité d'émetteurs d'un réseau de diffusion à au moins un équipement mobile, ce dernier étant également connecté via un réseau de communication mobile à un centre de gestion, ladite méthode est **caractérisée en ce qu'**elle comprend les étapes suivantes:
- détermination par le centre de gestion, de données de localisation de l'équipement mobile via le réseau de communication mobile,
- désignation, à partir des dites données de localisation, d'un moins un émetteur de diffusion couvrant la zone de localisation dudit équipement mobile,
- création d'au moins un message d'administration propre audit équipement mobile,
- acheminement du message d'administration à l'émetteur désigné pour transmission avec le flux de données numériques encryptées.

2. Méthode de transmission de messages d'administration selon la revendication 1, **caractérisé en ce que** le message d'administration est acheminé à l'ensemble des émetteurs pouvant couvrir la zone de localisation dudit équipement mobile.

3. Méthode de transmission de messages d'administration selon la revendication 1 ou 2, **caractérisée en ce que** les données de localisation de l'équipement mobile sont déterminées par l'identifiant de la cellule du réseau de communication mobile.

4. Méthode de transmission de messages d'administration selon la revendication 1 ou 2, **caractérisée en ce que** les données de localisation de l'équipement mobile sont déterminées par l'identifiant de l'émetteur de diffusion reçu par l'équipement mobile et transmis au centre de gestion.

5. Méthode de transmission de messages d'administration selon la revendication 1 ou 2, **caractérisée en ce que** les données de localisation de l'équipement mobile sont déterminées par un système de positionnement global (GPS) dudit équipement mobile et transmis au centre de gestion.

6. Méthode de transmission de messages d'administration selon la revendication 1 ou 2, **caractérisée en ce que** les données de localisation de l'équipement mobile sont déterminées par un système de communication bidirectionnelle tel que WiMax, ou Wifi.

7. Méthode de transmission de messages d'administration selon les revendications 1 à 6, **caractérisée en ce que** le centre de gestion reçoit des données représentatives du niveau de réception du signal provenant de l'émetteur de diffusion du flux, ledit centre de gestion acheminant les messages d'administration vers l'émetteur de diffusion du flux du plus proche voisinage de l'équipement mobile transmettant un signal d'un niveau maximal.

8. Méthode de transmission de messages d'administration selon la revendication 7, **caractérisée en ce que** le centre de gestion reçoit un identificateur de l'émetteur de diffusion accompagnant les données représentatives du niveau de réception du signal diffusé, ledit centre de gestion acheminant les messages d'administration vers l'émetteur de diffusion transmettant un signal d'un niveau maximal indépendamment de sa position par rapport à l'équipement mobile.
